Europäisches Patentamt

(19) European Patent Office

Office européen des brevets

(11) Publication number: **0 312 676 B1**

## (12) EUROPEAN PATENT SPECIFICATION

(45) Date of publication of patent specification :
27.03.91 Bulletin 91/13

(51) Int. Cl.⁵ : **E02B 7/20**, F16C 11/04

(21) Application number : 87870144.0

(22) Date of filing : 20.10.87

(54) **Hinge structure which makes a swinging movement of a floating boat door possible relative to a land-abutment.**

(43) Date of publication of application :
26.04.89 Bulletin 89/17

(45) Publication of the grant of the patent :
27.03.91 Bulletin 91/13

(84) Designated Contracting States :
BE DE GB IT NL

(56) References cited :
DE-A- 583 753
DE-A- 1 090 150
GB-A- 1 373 823
US-A- 2 954 251

(73) Proprietor : Lauriks, Léon
Predikherenhoevestraat 30
B-2638 Reet (BE)

(72) Inventor : Lauriks, Léon
Predikherenhoevestraat 30
B-2638 Reet (BE)

(74) Representative : Pieraerts, Jacques et al
Bureau Gevers S.A. rue de Livourne 7 bte 1
B-1050 Bruxelles (BE)

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a hinge structure which makes possible a swinging movement of a floating boat door relative to a land-abutment in accordance with the preamble of claim 1. Such a hinge structure is known from e.g. DE-A-1090150.

Boat doors as such are known in the literature as structures which are floatingly driven against abutment-farming quay walls or land-abutments and are thereafter ballasted, whereby they are caused to sink on a stop-forming structure formed thereby on the bottom.

In this position, the boat door can fulfill the function of a baffle structure and serve either as lock door, or as closure for a dry dock.

Starting from this principle, there may be considered an application for arranging a floating baffle structure cross-wire through a stream or river to serve as closure in the case of storm flood.

In such a case, mainly when a boat door will have a large size, the problem is raised of the hinged connection of the floating boat door to the fixed structures, that is the land-abutments. Indeed, the floating boat door is subjected to movements in the cross- and lenghtwise direction which correspond in some way to the rolling and stamping of a ship, a pontoon or similar floating structure. Such movements do not make it simply possible to hingedly connect the floating boat door to a fixed structure, as such structure should allow a movement with four degrees of freedom, namely :

- a rotating movement when closing/opening the boat door,
- a vertical movement of the boat door when sinking/floating up,
- a rotation about the boat door lenghtwise axis (rolling),
- a rotation about the boat door cross-wise axis (stamping).

The invention has now for purpose to provide a new and original solution whereby floating and to be ballasted boat doors whatever be the size thereof, can be hingedly connected to a land-abutment, while the unavoidable movements along the cross- or lengthwise direction of the boat door can be accomodated by the hinge structure according to the invention.

To obtain this according to the invention, the arm of the floating boat door is provided at its end with an open bearing plate which surrounds a diabolo-like sliding sleeve which is slidable in turn along a vertical post secured to a land-abutment.

Still according to the invention, said open bearing plate which is present on the end of said arm, has a substantially circle-shaped passageway for receiving said diabolo-like sliding sleeve.

Advantageously, said substantially circle-shaped passageway has a clearance along the lenthwise direction which is somewhat larger than the clearance which is made possible along the cross-wise direction.

Other details and advantages of the invention will stand out from the following description of a hinge structure which makes possible a swinging movement of a boat door relative to a land-abutment, according to the invention. This description is only given by way of example and does not limit the invention. The reference numerals pertain to the accompanying figures.

Figure 1 is a diagrammatical view of a floating boat door in the position wherein this one lies along a bank, or quay wall, and also illustrates the possible swinging movement of the boat door between two land-abutments.

Figure 2 is, on a larger scale, a top view of the arm from the hinge structure according to the invention.

Figure 3 is for a part a cross-section, and for a part a side view of the hinge structure according to the invention (two positions).

Figure 4 is, on a still larger scale, a cross-section through the diabolo-like sliding sleeve and part of the bearing plate from the hinge structure according to the invention.

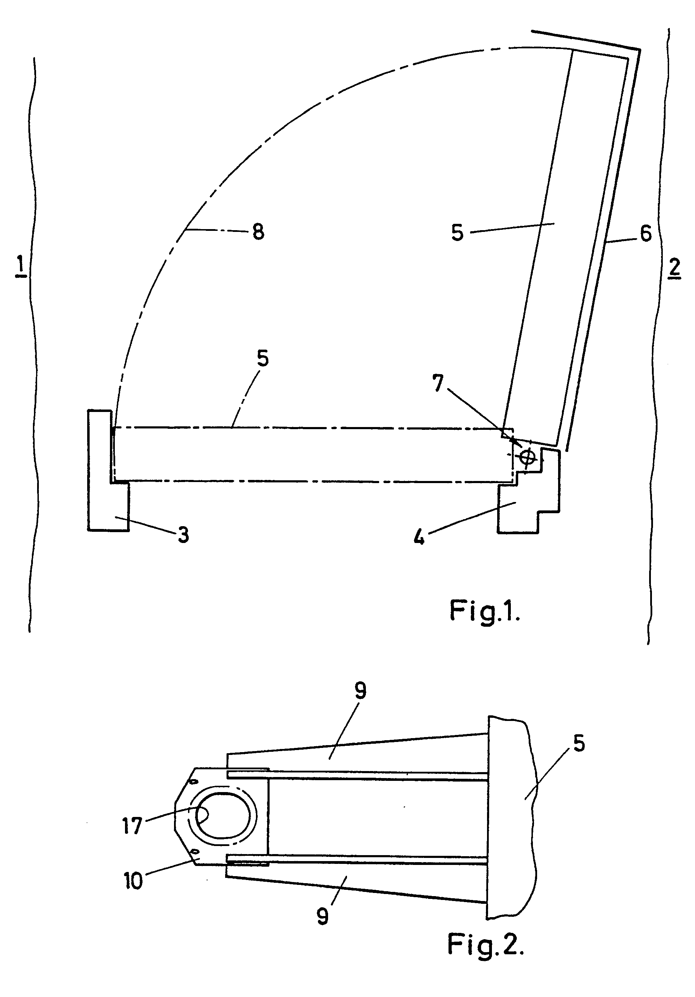

Before describing in detail the hinge structure according to the invention, reference will be made as far as this makes possible a good understanding of the invention, to figure 1.

In this figure, the land-abutments on both banks 1 and 2, are shown with references 3 and 4.

The floating door 5 is shown in the position moored along a bank or quay wall 6. In this diagram the location of the hinge structure according to the invention is shown with the general reference 7. The swinging movement of the floating door corresponds to the arc of circle 8.

The floating door when it is brought in position and thereafter ballasted and caused to sink, is provided sidewise with propelling means, such as propelling screws. These means, the ones which insure the slowing-down of the swinging movement of the floating door, namely pulling cables, nor the general notion which lies at the basis of the design, are no part of the essence of the invention. They are briefly sketched to make clearly stand out the nature and the function of the hinge structure according to the invention.

As even short movements in the cross- and lengthwise movement of the floating door 5 during the swinging movement thereof, when opening or closing the storm-flood dam, cannot be accomodated by conventional sleeves which are rotatable about a vertical post and act as hinge components, there has been designed according to the invention and for the purpose of also allowing substantial movements along both above-defined directions, a new and original hinge structure, the description of which follows.

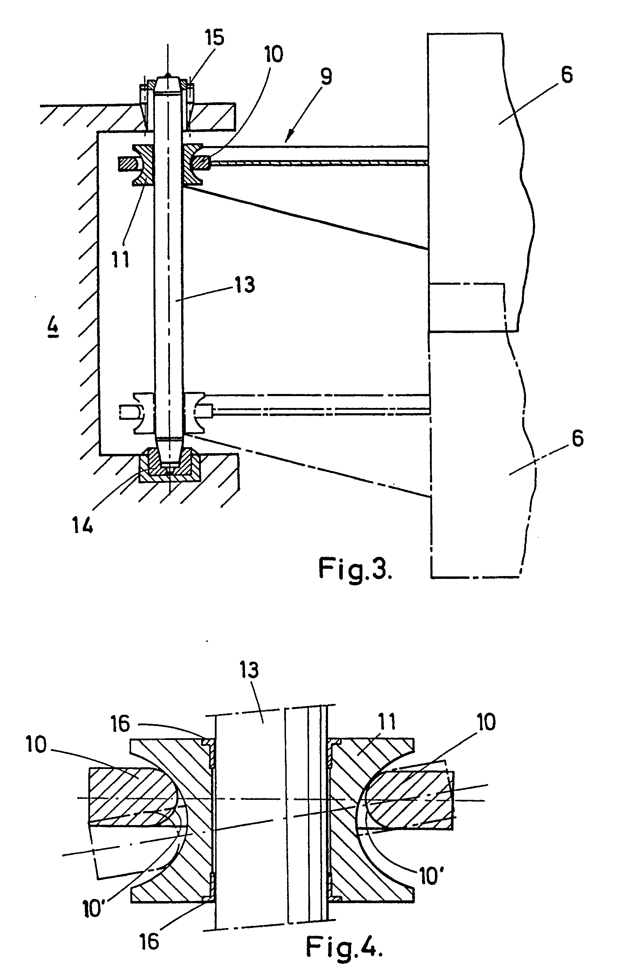

The floating door 5 is provided along the lengthwise axis thereof, at the one end thereof, with an arm 9 which is provided at the end thereof with an open bearing plate 10 which surrounds and supports a diabolo-like sliding sleeve (figures 3 and 4).

The diabolo-like sliding sleeve 11 is slidingly arranged along a post 13. This post 13 is supported in a non-further described way in one of the land-abutments, namely the land-abutment 4. At the bottom, the post 13 is enclosed in a cone-shaped buse part and at the top in a collar 15. The open bearing plate 10 is provided in the center with a substantially circle-shaped passageway 17, the edge 10' of which being smoothly rounded. The diabolo-like sliding sleeve 11 which is provided inwardly with two bronze guide bushings 16, is radiused outwardly along an arc of circle and thus bears under normal conditions, on the open bearing plate 10.

In actual practice, the circle-shaped passageway 17 (figure 2) in the open bearing plate 10 is slightly oval-shaped, in such a way that the clearance along the lengthwise direction relative to the post 13 is wider than the clearance along the cross-wise direction. By way of example, it may be assumed that this clearance is 300 mm in the cross-wise direction and 800 mm in the lengthwise direction.

This arrangement of the boat door 5 allows rocking movements thereof in the cross-wise direction up to 10°. These magnitudes are clearly only given by way of example and are naturally not limitative.

A lubricating system is provided to allow lubricating the guide bushings 16 relative to the post 13 and also to insure a lubrication of the contact area between the diabolo-like sliding sleeve 11 and the rounded, substantially circle-shaped but preferably oval-shaped passageway 17 in the open bearing plate 10.

The size of the diabolo-like sliding sleeve 11 will notably be selected as a function of thickness of the open bearing plate 10. The length of post 13 also is dependent on the path of the diabolo-like sliding sleeve 11, thus of arm 9 relative to post 13.

In figure 3 have indeed been shown two positions of the floating door 5 and arm 9 relative to land-abutment 4, thus also relative to post 13.

The position in dotted line corresponds to a possible position of the door 5 when this one is ballasted and sunk on the river bottom.

It thus appears clearly from the description that the invention provides an excellent solution for rotatable fastening to a vertical post, a floating door which has not only to perform a swinging movement about a post, but also a vertical displacement along this vertical post.

It is clear that the invention is not limited to the above-described embodiment and changes might be brought thereto without departing from the scope of the patent application.

## Claims

1. Hinge structure which allows a swinging movement of a floating boat door (5) relative to a land-abutment (4) wherein the floating boat door (5) is provided with an arm (9) extending in the lengthwise direction of said door (5), characterised in that at the end of said arm (9) an open bearing plate (10) which supports and surrounds a diabolo-like sliding sleeve (11) which is slidable in turn along a vertical post (13) secured to a land-abutment (4) is provided.

2. Hinge structure according to claim 1, with the characteristic that said open bearing plate (10) which is present on the end of said arm (9), has a substantially circle-shaped passageway (17) for receiving said diabolo-like sliding sleeve (11).

3. Hinge structure according to claim 2, with the characteristic that said substantially circle-shaped passageway (17) in said open bearing plate (10) has a clearance in the lengthwise direction which is somewhat larger than the clearance which is being made possible in the cross-wise direction.

4. Hinge structure according to one of the claims 1-3, with the characteristic that said diabolo-like sliding sleeve (11) has in lengthwise cross-section, that is along its lengthwise axis, a holowing which makes possible a movement of the floating door (5) over an angle of 10°, for example.

5. Hinge structure according to one of the claims 1-4, with the characteristic that said diabolo-like sliding sleeve (11) is provided with means which ensure a lubrication along the outer side, that is along the outer surface which contacts the edge (10') of the open bearing plate (10).

## Ansprüche

1. Gelenkkonstruktion, die eine Schwenkbewegung einer schwimmenden (Boots) tür (5) relativ zu einer Landabstützung (4) erlaubt, wobei die schwimmende (Boots) tür (5) mit einem Arm (9) versehen ist, der in Längsrichtung dieser Tür (5) sich erstreckt, dadurch gekennzeichnet, daß am Ende dieses Arms (9) eine offene Lagerplatte (10) vorgesehen ist, die ein diaboloartiges Schieberventil (11) abstützt und umgibt, welches seinerseits längs eines vertikalen, an einer Landabstützung (4) befestigten Pfostens (13) gleitverschieblich ist.

2. Gelenkkonstruktion nach Anspruch 1, dadurch gekennzeichnet, daß diese Offene Lagerplatte (10), die auf dem Ende dieses Arms (9) vorgesehen ist, einen im wesentlichen kreisförmigen Durchlaß (17) zur Aufnahme dieses diaboloartigen Schieberventils (11) hat.

3. Gelenkkonstruktion nach Anspruch 2, mit dem Merkmal, daß dieser im wesentlichen kreisförmige Durchlaß (17) in dieser offenen Lagerplatte (10) ein Spiel in Längsrichtung hat, das etwas größer als das in Querschnittsrichtung mögliche Spiel ist.

4. Gelenkkonstruktion nach einem der Ansprüche 1 bis 3 mit der Charakteristik, daß dieses diaboloartige Schieberventil (11) im Längsquerschnitt, das heißt entlang seiner Längsachse eine Aushöhlung hat, die eine Bewegung der schwimmenden Tür (5) beispielsweise über einen Winkel von 10° ermöglicht.

5. Gelenkkonstruktion nach einem der Ansprüche 1 bis 4, mit der Charakteristik, daß dieses diaboloartige Schieberventil (11) mit Mitteln versehen ist, die eine Schmierung längs der Außenseite, das heißt längs der Außenfläche sicherstellt, welche die Kante (10') der offenen Lagerplatte (10) berührt.

## Revendications

1. Structure à charnière qui permet un mouvement oscillant d'un bateau-porte flottant (5) par rapport à un support terrestre (4), le bateau-porte flottant (5) étant équipé d'un bras (9) s'étendant dans la direction longitudinale de la porte (5), caractérisée en ce qu'à l'extrémité du bras (9) est prévue une plaque de support ouverte (10) qui supporte et entoure une buselure coulissante (11), d'un genre de diabolo, qui peut coulisser à son tour le long d'un montant vertical (13) fixé au support terrestre.

2. Structure de charnière suivant la revendication 1, caractérisée en ce que la plaque de support ouverte (10) qui est présente à l'extrémité du bras (9) présente un passage sensiblement de forme circulaire (17) destiné à recevoir la buselure coulissante (11) d'un genre de diabolo.

3. Structure de charnière suivant la revendication 2, caractérisée en ce que le passage sensiblement de forme circulaire (17) dans la plaque de support ouverte (10) présente un jeu dans la direction longitudinale quelque peu plus grand que le jeu rendu possible dans la direction transversale.

4. Structure de charnière suivant l'une quelconque des revendications 1 à 3, caractérisée en ce que la buselure coulissante d'un genre de diabolo (11) présente en section transversale longitudinale, située le long de son axe longitudinal, un évidement qui permet un mouvement de la porte flottante (5) d'un angle de 10° par exemple.

5. Structure de charnière suivant l'une quelconque des revendications 1 à 4, caractérisée en ce que la buselure coulissante d'un genre de diabolo (11) est équipée de moyens qui assurent une lubrification le long du côté externe situé le long de la surface externe qui entre en contact avec le bord 10'de la plaque de support ouverte (10).

Fig.1.

Fig.2.

Fig.3.

Fig.4.